(19) **Europäisches Patentamt**
**European Patent Office**
**Office européen des brevets**

(11) **EP 4 744 504 A1**

(12) **EUROPEAN PATENT APPLICATION**

(43) Date of publication:
20.05.2026  Bulletin 2026/21

(21) Application number: 24213573.9

(22) Date of filing: **18.11.2024**

(51) International Patent Classification (IPC):
*A23G 9/14* (2006.01)     *A23G 9/16* (2006.01)
*A23G 9/20* (2006.01)     *A23G 9/26* (2006.01)
*A23G 9/28* (2006.01)     *A23G 9/46* (2006.01)
*A23G 9/48* (2006.01)     *A23G 9/50* (2006.01)

(52) Cooperative Patent Classification (CPC):
**A23G 9/14; A23G 9/16; A23G 9/20; A23G 9/22;
A23G 9/26; A23G 9/28; A23G 9/46; A23G 9/48;
A23G 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MAGNUM IP HOLDINGS B.V.**
**1017 BM Amsterdam (NL)**

(72) Inventor: **The designation of the inventor has not yet been filed**

(74) Representative: **Potter Clarkson**
**Chapel Quarter**
**Mount Street**
**Nottingham NG1 6HQ (GB)**

(54) **PROCESS FOR THE MANUFACTURE OF FROZEN CONFECTION**

(57)    A process for the manufacture of a plurality of dimensionally similar frozen confections, the process comprising the steps of:
i) preparing a source of aerated frozen confection; followed by
ii) feeding the aerated frozen confection to the inlet of a pipe to produce a continuous stream of aerated frozen confection exiting in an extrusion direction via an outlet of the pipe; followed by
iii) sequentially cutting through the continuous stream of extruded aerated frozen confection, to produce a continuous sequence of dimensionally similar frozen confections
wherein the cutting is carried out by at least one heated blade.

**EP 4 744 504 A1**

**Description**

**Field of the invention**

The invention relates to a process for the manufacture of a plurality of dimensionally similar frozen confections comprising a stick, and an apparatus for carrying out the process.

**Background of the invention**

Aerated frozen confections such as ice cream, is commonly produced by extruding a flow of continuous material that is then cut to produce the individual frozen confections. In a common arrangement, the extrusion is carried out vertically or horizontally on a belt after which the cut frozen confection falls under gravity onto a surface, which is then passed to a cooling tunnel to harden the frozen confection so that it can be passed through subsequent processing steps in a frozen state.

The use of extrusion to form frozen confections such as ice cream or sorbet are well-known. In an example of a commercial process, a continuous stream of extruded frozen confection is generated at around -6°C, which is cut into billets, and into which a stick may be inserted. Such processes are sometimes referred to as extrude-and-cut processes. In such processes a sequence of sticks is inserted, followed by the cutting, to produce a sequence of dimensionally similar sticked frozen confections. This is then followed by passing the sticked frozen confections through a hardening tunnel to reduce their temperature to around -18°C before subsequent processing steps such as coating, decorating and wrapping are carried out. This can produce the dimensionally similar frozen confections at a fast rate, e.g. around 180 per minute.

The standard manufacturing process for frozen aerated confections is described in detail in, for example, "Ice Cream", 6th Edition, chapters 6, 7 and 9. This consists of a number of steps: i) mixing the ingredients, ii) pasteurisation and homogenisation, iii) ageing, iv) aerating and partially freezing the mix in an ice cream freezer, and v) drawing the partially frozen aerated confection from the freezer, and vi) hardening.

US 2005/0214416 discloses extrusion of aerated ice cream or sorbets from a twin screw extruder.

US 2006/0233919 A1 discloses a process for manufacture of a frozen aerated confection, wherein an initial freezing step is carried out in a preliminary freezing and aeration step, followed by further freezing in a cold extrusion step. Examples of extrusion temperatures are in the range of from -9°C to -15°C. However, the torque required to extrude the ice cream increases significantly as the temperature of extrusion drops over this range.

US 6 228 412 discloses a mon-screw extrusion process for manufacturing frozen aerated products, particularly ice cream.

WO2009/068428 A1 discloses a method of producing an extruded, preferably unaerated, water-based frozen composition having a high ice content. In this case, the barrel is cooled with a coolant so as to form the frozen composition which remains extrudable, such as by a cooling jacket, but may be unchilled near the exit, so that the extruded confection may leave the extruder closer to ambient temperature.

However there remains a need to provide a continuous production of dimensionally similar sticked frozen confections at higher rates of production.

**Summary of the Invention**

The invention relates to a process for the manufacture of a plurality of dimensionally similar frozen confections, the process comprising the steps of:

    i) preparing a source of aerated frozen confection; followed by
    ii) feeding the aerated frozen confection to the inlet of a pipe to produce a continuous stream of aerated frozen confection exiting in an extrusion direction via an outlet of the pipe; followed by
    iii) sequentially cutting through the continuous stream of extruded aerated frozen confection, to produce a continuous sequence of dimensionally similar frozen confections

wherein the cutting is carried out by at least one heated blade.

The inventors have found that by cutting through a continuous stream of extruded aerated frozen confection with a heated blade, a clean cut is provided and allows for an increase in the speed of production as the heating effect allows the blade to pass through the frozen confection with less frictional forces. This is especially the case when the frozen confection contains inclusions that are harder than the surrounding confection.

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, gelato, frozen yoghurt, sorbets, granitas, shaved ices and the like. Preferably the frozen confectionery is an ice cream.

The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the product will vary depending on the desired product characteristics. In the context of the present invention the level of overrun is typically from 0 to 150%, preferably from 60 to 150%, more preferably from 60 to 100%.

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 7th Edition R.T. Marshall, H.D. Goff and R.W. Hartel, Kluwer Academic/ Plenum Publishers, New York 2013.

Preferably the extrusion direction is a horizontal direction. The extruded aerated frozen confection is therefore not exiting under gravity, and is typically defying gravity by exiting horizontally. However, this provides for the possibility that the produced continuous sequence of dimensionally similar frozen confections are not in a falling arrangement in a more controlled manner.

Preferably the cutting occurs while the continuous stream of extruded aerated frozen confection is unsupported in free space. Ideally it occurs immediately after the exiting from the pipe.

In a preferred embodiment, the aerated frozen confection is urged through the pipe by a rotating screw. The screw may be located within the pipe or could be part of a screw extruder that feeds into an inlet of the pipe.

Additionally, this may be further applied to a process for producing a continuous sequence of dimensionally similar sticked aerated frozen confections, the process starting with the above process, and wherein: prior to the cutting, sequentially inserting a plurality of grippable sticks into the continuous stream of extruded aerated frozen confection at equally spaced intervals, and such that a grippable length of each grippable stick protrudes from the continuous stream of aerated frozen confection, the cutting step thereby producing the continuous sequence of dimensionally similar sticked aerated frozen confections.

In a preferred arrangement, during or before the cutting, each grippable length of stick is gripped by one of a plurality of spaced apart supporting carriages, such that each dimensionally similar sticked frozen confection is supported in free space during cutting and is subsequently conveyed by its respective supporting carriage to at least one subsequent processing step.

In this embodiment, the plurality of supporting carriages are preferably adapted to have a variable separation between adjacent carriages. More preferably the spacing between adjacent supporting carriages increases during the cutting, as this assists in the separation of the dimensionally similar frozen confections.

Preferably the extruded aerated frozen confection has a core temperature of from -10°C to -19°C, preferably from -13 to -19°C. This temperature range is somewhat colder than is typically extruded, as the frozen confection becomes hardened and difficult to pass through a pipe and is harder to cut through. However, as the cutting blade is heated, there is local melting of the frozen confection during cutting, and the blade can pass through relatively easily. Additionally, at this temperature, there is no need for a subsequent hardening step, and therefore no need of a separate hardening tunnel, greatly simplifying the process of manufacture, and allowing for greater increases in the speed of production.

Accordingly, the blade is preferably at a temperature of from 60°C to 150°C, preferably from 80°C to 120°C prior to each sequential cut.

Preferably the velocity of the blade during cutting has a component of velocity perpendicular to the extrusion direction and a component of velocity parallel and in the same direction as the extrusion direction. Preferably the component of velocity parallel to the extrusion direction is substantially the same as the speed of extrusion. This allows the blade to pass cleanly through the frozen confection, providing a neater and higher quality final product.

Generally the blade has a cutting edge and a trailing edge, the edges being aligned to be perpendicular to the extrusion direction. Typically the distance between the cutting edge and trailing edge defining the blade length, and wherein the blade length is such that the cutting edge has not passed through the extruded aerated frozen confection as the trailing edge enters the extruded aerated frozen confection. It has been found that this provides less frictional force on the frozen confection, and therefore provides a cleaner cut, as less frozen confection gets dragged along with the movement of the blade.

The blade will lose some heat during the cutting, and therefore a heating source must be provided to maintain the blade in a heated condition. Preferably, during each cut the blade moves along an advancing stroke followed by a return stroke, wherein the cutting occurs during the advancing stroke. This enables the blade to be reheated at the end of the return stroke, so that it is heated again ready for its next advancing stroke.

The blade may be heated by a wide variety of methods, however, it has been found that heating the blade by magnetic induction is highly effective. This is a non-contact method that can heat the blade in a short space of time.

It has been found to be highly preferable if transition from the advancing stroke to the return stroke occurs when the cutting edge of the blade has advanced past the continuous stream of extruded aerated frozen confection but only by less than 10mm, preferably by even less, such as less than 4mm. Thus the cutting edge of the blade passes completely through the frozen confection in one advancing stroke and then returns to be reheated after a return stroke where no contact with the frozen confection takes place.

The use of the heated blade as described, allows for accelerated production rates, and therefore preferably the extrusion speed is greater than 5cm/s, preferably from 5 to 20cm/s, more preferably from 8 to 15 cm/s.

The invention will now be illustrated by way of example, and with reference to the following figures, in which:

Figure 1 is a perspective view of a heated blade and associated mechanism for use in a process according to the present invention with the blade at the end of its advancing stroke.

Figure 2 is a perspective view of the heated blade shown in figure 1 with the blade at the end of its return stroke.

Turning to the figures, shown is a plurality of dimensionally similar frozen confections **10** produced from a continuous stream of aerated frozen confection **12** exiting in an extrusion direction **A** via an outlet of a pipe (not shown). The dimensionally similar frozen confections **10** each comprise a grippable stick **14** protruding vertically upwards therefrom, and which is supported by a respective carriage **16**.

Also provided is a cutting blade **20** that is mounted onto a blade support shaft **22**. The blade support shaft **22** is attached to two hinged linking connectors **24**. The two hinged linking connectors **24** are in turn hingedly linked to a drive shaft **26** and to a pair of parallel cross-shafts **28**. The drive shaft **26** is driven by a rotating cam **30** and the pair of parallel cross-shafts **28** are held in place by rockers **32**.

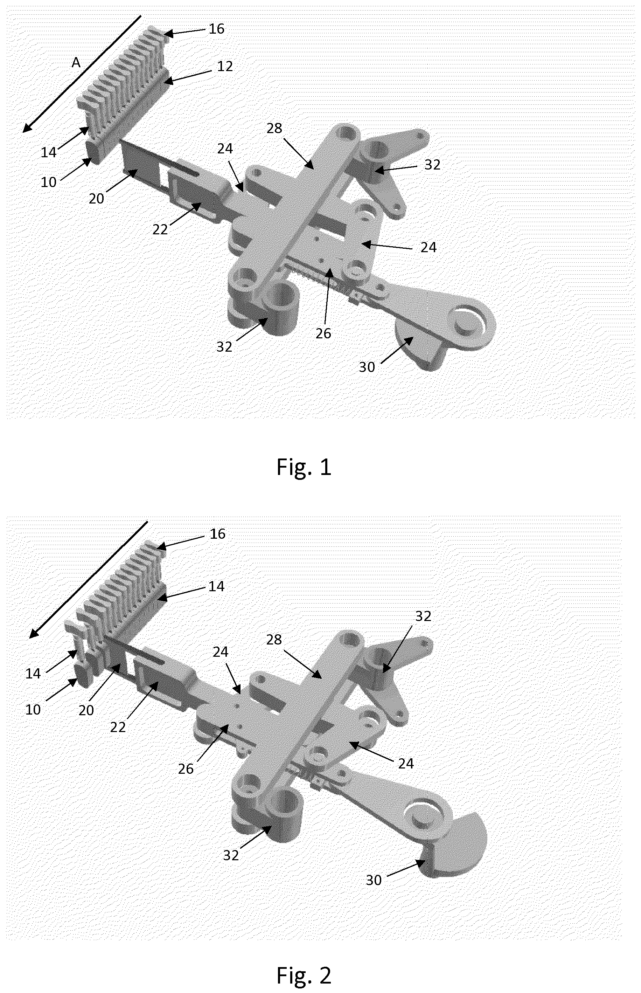

As shown in figure 1, the blade 20 is in a fully retracted position at the end of a return stroke and at the beginning of an advancing stroke. As the continuous stream of aerated frozen confection **12** exits a pipe (not shown), grippable sticks **14** are inserted from above at equally spaced intervals. The movement of the blade in its advancing stroke is mechanically timed to cut through the continuous stream of aerated frozen confection **12** at a location equidistant between two adjacent greppable sticks, as will now be described.

The rotating cam **30** rotates and drives the drive shaft **26,** which in turn drives the blade support shaft **22** so that the blade **20** proceeds along its advancing stroke. This provides the blade with a component of velocity that is perpendicular to A. Additionally, the action of the hinged linking connectors **24** causes the pair of parallel cross-shafts **28** to move in a direction parallel to **A** which has the effect of applying a component of velocity to the blade that is in the same direction as **A.**

As the blade 20 advances, it cuts through the continuous stream of aerated frozen confection **12** until it reaches the end of its advancing stroke as shown in figure 2. The action of the rotating cam 30 then causes the blade 20 to follow a return stroke back to the starting position shown in figure 1. This advancing and return stroke it then repeated to produce each dimensionally similar frozen confection **10.**

As the blade loses some heat during the cutting, the blade is heated by an induction coil (not shown) while it is in the position shown in figure 1.

## Claims

1. A process for the manufacture of a plurality of dimensionally similar frozen confections, the process comprising the steps of:

   i) preparing a source of aerated frozen confection; followed by
   ii) feeding the aerated frozen confection to the inlet of a pipe to produce a continuous stream of aerated frozen confection exiting in an extrusion direction via an outlet of the pipe; followed by
   iii) sequentially cutting through the continuous stream of extruded aerated frozen confection, to produce a continuous sequence of dimensionally similar frozen confections

   wherein the cutting is carried out by at least one heated blade.

2. A process according to any one of the preceding claims, wherein the extrusion direction is a horizontal direction.

3. A process according to claim 1 or claim 2, wherein the cutting occurs while the continuous stream of extruded aerated frozen confection is unsupported in free space.

4. A process according to any one of the preceding claims, wherein step iii) is preceded by sequentially inserting a plurality of grippable sticks into the continuous stream of extruded aerated frozen confection at equally spaced intervals, and such that a grippable length of each grippable stick protrudes from the aerated frozen confection, step iii) thereby producing a continuous sequence of dimensionally similar sticked aerated frozen confections.

5. A process according to any one of the preceding claims, wherein the extruded aerated frozen confection is at a temperature of from -10°C to -19°C.

6. A process according to any one of the preceding claims, wherein the blade is at a temperature of greater than 60°C to 150°C, preferably from 80°C to 120°C prior to each sequential cut.

7. A process according to any one of the preceding claims, wherein the velocity of the blade during cutting has a component of velocity perpendicular to the extrusion direction and a component of velocity parallel and in the same direction as the extrusion direction.

8. A process according to claim 7, wherein the velocity of the blade during cutting has a component of velocity parallel to the extrusion direction that is the same as the extrusion speed.

9. A process according to any one of the preceding claims, wherein the blade has a cutting edge and a trailing edge, the edges being aligned to be perpendicular to the extrusion direction.

10. A process according to any one of the preceding claims, wherein the blade has a cutting edge and a trailing edge, the distance between the cutting edge and trailing edge defining the blade length, and wherein the blade length is such that the cutting edge has not passed through the extruded aerated frozen confection as the trailing edge enters the extruded aerated frozen confection.

11. A process according to any one of the preceding claims, wherein during each cut the blade moves along an advancing stroke followed by a return stroke, wherein the cutting occurs during the advancing stroke.

12. A process according to claim 11, wherein the transition from the advancing stroke to the return stroke occurs when the cutting edge of the blade has advanced past the continuous stream of extruded aerated frozen confection by less than 10mm.

13. A process according to any one of the preceding claims, wherein the blade is heated by magnetic induction.

14. A process according to any one of the preceding claims, wherein the extrusion speed is greater than 5cm/s, preferably from 5 to 20cm/s, more preferably from 8 to 15 cm/s.

Fig. 1

Fig. 2

Europäisches
Patentamt

European
Patent Office

Office européen
des brevets

# EUROPEAN SEARCH REPORT

**Application Number**

**EP 24 21 3573**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/142462 A1 (ZHU SHIPING [GB]) 4 June 2009 (2009-06-04) * paragraphs [0011], [0032], [0045], [0072]; claims 8,11; figure 1; examples 1-5 * | 1-14 | INV. A23G9/14 A23G9/16 A23G9/20 A23G9/26 A23G9/28 A23G9/46 A23G9/48 A23G9/50 |
| Y | US 2 859 714 A (CUMMINGS THOMAS N ET AL) 11 November 1958 (1958-11-11) * column 3 - column 4; claim 1 * | 1-14 | |
| Y | EP 0 223 884 A1 (MEIJI MILK PROD CO LTD [JP]) 3 June 1987 (1987-06-03) * page 2, line 1 - line 5 * * page 3, line 11 - line 16 * | 1-14 | |
| Y | EP 3 355 711 B1 (TETRA LAVAL HOLDINGS & FINANCE [CH]) 23 October 2019 (2019-10-23) * paragraphs [0001], [0002], [0035] * | 1-14 | |
| Y | EP 0 207 574 B1 (UNILEVER NV [NL]; UNILEVER PLC [GB]) 21 August 1991 (1991-08-21) * paragraph [0001] * * column 3, line 11 - column 3, line 30 * * column 2, line 40 - column 2, line 51 * * column 2, line 50 - column 3, line 6 * | 1-14 | TECHNICAL FIELDS SEARCHED (IPC)  A23G |
| Y | FR 2 678 203 A1 (MACE DOMINIQUE [FR]) 31 December 1992 (1992-12-31) * figures 1,2 * | 1-14 | |

The present search report has been drawn up for all claims

| Place of search | Date of completion of the search | Examiner |
|---|---|---|
| The Hague | 15 April 2025 | Gieler, Melanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3573

This annex lists the patent family members relating to the patent documents cited in  the above-mentioned European search report.
The members are as contained in the European Patent Office EDP file on
The European Patent Office is in no way liable for these particulars which are merely given for the purpose of information.

15-04-2025

| Patent document cited in search report | | | Publication date | Patent family member(s) | | Publication date |
|---|---|---|---|---|---|---|
| US 2009142462 | A1 | | 04-06-2009 | EA 201000911 | A1 | 29-10-2010 |
| | | | | EP 2222184 | A1 | 01-09-2010 |
| | | | | ES 2390201 | T3 | 07-11-2012 |
| | | | | US 2009142462 | A1 | 04-06-2009 |
| | | | | WO 2009068428 | A1 | 04-06-2009 |
| US 2859714 | A | | 11-11-1958 | NONE | | |
| EP 0223884 | A1 | | 03-06-1987 | NONE | | |
| EP 3355711 | B1 | | 23-10-2019 | CN 107920555 | A | 17-04-2018 |
| | | | | DK 3355711 | T3 | 02-01-2020 |
| | | | | EP 3355711 | A1 | 08-08-2018 |
| | | | | PL 3355711 | T3 | 30-04-2020 |
| | | | | WO 2017055406 | A1 | 06-04-2017 |
| EP 0207574 | B1 | | 21-08-1991 | AT E66344 | T1 | 15-09-1991 |
| | | | | EP 0207574 | A2 | 07-01-1987 |
| FR 2678203 | A1 | | 31-12-1992 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050214416 A
- US 20060233919 A1
- US 6228412 B
- WO 2009068428 A1

**Non-patent literature cited in the description**

- Ice Cream
- **R.T. MARSHALL** ; **H.D. GOFF** ; **R.W. HARTEL**. Ice Cream. Kluwer Academic/ Plenum Publishers, 2013